# EUROPEAN PATENT APPLICATION

(11) **EP 4 141 217 A1**
(43) Date of publication of application: **01.03.2023**
(21) Application number: 22190974.0
(22) Date of filing: 18.08.2022
(51) Int. Cl.: E21B 47/107, E21B 47/00

(54) **METHODS OF CHARACTERIZING ACOUSTIC OUTPUT FROM HYDROCARBON WELLS**

(30) Priority: 27.08.2021 US 202163260630 P
(71) Applicant: ExxonMobil Technology and Engineering Company, Spring, TX 77389 (US)
(72) Inventor: SCHMIDT, David J., Morristown, 07960 (US); KUMARAN, Krishnan, Raritan, 08869 (US); SALAHI, Bry-Ann, Spring, 77386 (US); SEABROOK, Brian, Houston, 77008 (US)
(74) Representative: ExxonMobil Chemical Europe Inc.

(57) **Abstract**

Methods of characterizing acoustic output from a hydrocarbon well and hydrocarbon wells that include controllers that perform the methods are disclosed herein. The methods include receiving the acoustic output, determining a plurality of acoustic fingerprints, and electronically clustering the plurality of acoustic fingerprints. The acoustic output includes information regarding a plurality of sound events, and each sound event of the plurality of sound events includes at least one corresponding sound detected at the hydrocarbon well. The plurality of acoustic fingerprints includes a corresponding acoustic fingerprint for each sound event of the plurality of sound events. The electronically clustering includes utilizing a clustering algorithm to generate a plurality of acoustic event clusters. Each acoustic event cluster of the plurality of acoustic event clusters includes a corresponding fingerprint subset of the plurality of acoustic fingerprints, and each acoustic fingerprint in the corresponding fingerprint subset includes at least one similar acoustic property.

## Description

### Field of the Invention

The present disclosure is directed generally to methods of characterizing acoustic output from a hydrocarbon well and/or to hydrocarbon wells that include controllers that perform the methods.

### Background of the Invention

Acoustic monitoring may be utilized to detect sounds at a hydrocarbon well. These sounds may be generated by various activities performed at, or within, the hydrocarbon well. As examples, opening and closing of valves, operation of pumps, fluid flows, and the like each may generate corresponding sounds that may be detected at the hydrocarbon well.

It may be beneficial to correlate detected sounds to specific activities and/or to notify an operator of the hydrocarbon well when specific new or predetermined sounds are detected. As an example, the operator might be notified upon detection of a sound indicative of failure, or impending failure, of a component of the hydrocarbon well. As another example, the operator might be notified if a previously undetected sound is detected at the hydrocarbon well.

Sounds may be detected at a plurality of detection locations of a hydrocarbon well, and each detection location may detect hundreds, or even thousands, of sounds each day. As such, it may be challenging, or even impossible, to manually classify and/or characterize all sounds generated at the hydrocarbon well. Thus, there exists a need for improved methods of characterizing acoustic output from a hydrocarbon well and/or for hydrocarbon wells that include controllers that perform the methods.

### Summary of the Invention

Methods of characterizing acoustic output from a hydrocarbon well and hydrocarbon wells that include controllers that perform the methods are disclosed herein. The methods include receiving the acoustic output, determining a plurality of acoustic fingerprints, and electronically clustering the plurality of acoustic fingerprints. The acoustic output includes information regarding a plurality of sound events, and each sound event of the plurality of sound events includes at least one corresponding sound detected at the hydrocarbon well. The plurality of acoustic fingerprints includes a corresponding acoustic fingerprint for each sound event of the plurality of sound events. The electronically clustering includes utilizing a clustering algorithm to generate a plurality of acoustic event clusters. Each acoustic event cluster of the plurality of acoustic event clusters includes a corresponding fingerprint subset of the plurality of acoustic fingerprints, and each acoustic fingerprint in the corresponding fingerprint subset includes at least one similar acoustic property.

### Brief Description of the Drawings

FIG. 1 is a schematic illustration of examples of hydrocarbon wells that include controllers programmed to perform methods, according to the present disclosure.
FIG. 2 is a flowchart depicting examples of methods of characterizing acoustic output from a hydrocarbon well, according to the present disclosure.
FIG. 3 is a plot illustrating an example of acoustic output from a hydrocarbon well, according to the present disclosure.
FIG. 4 is a plot illustrating an example of an amplitude fingerprint that may be utilized with methods, according to the present disclosure.
FIG. 5 is a plot illustrating an example of a frequency fingerprint that may be utilized with methods, according to the present disclosure.
FIG. 6 is another plot illustrating examples of fingerprints that may be utilized with methods, according to the present disclosure.
FIG. 7 is a plot illustrating examples of filtered fingerprints that may be utilized with methods, according to the present disclosure.
FIG. 8 is a plot illustrating examples of normalized fingerprints that may be utilized with methods, according to the present disclosure.
FIG. 9 is a visual example of a clustering algorithm that may be utilized with methods, according to the present disclosure.
FIG. 10 is an example of a trade-off curve that may be utilized with methods, according to the present disclosure.
FIG.'s 11A-D are a collection of plots illustrating examples of clusters and a trade-off curve that may be utilized with methods, according to the present disclosure.
FIG.'s 12A-D are a collection of plots illustrating examples of refined clusters and refined trade-off curves that may be utilized with methods, according to the present disclosure.
FIG.'s 13A-E are a collection of plots illustrating examples of singletons merged into clusters, according to the present disclosure.

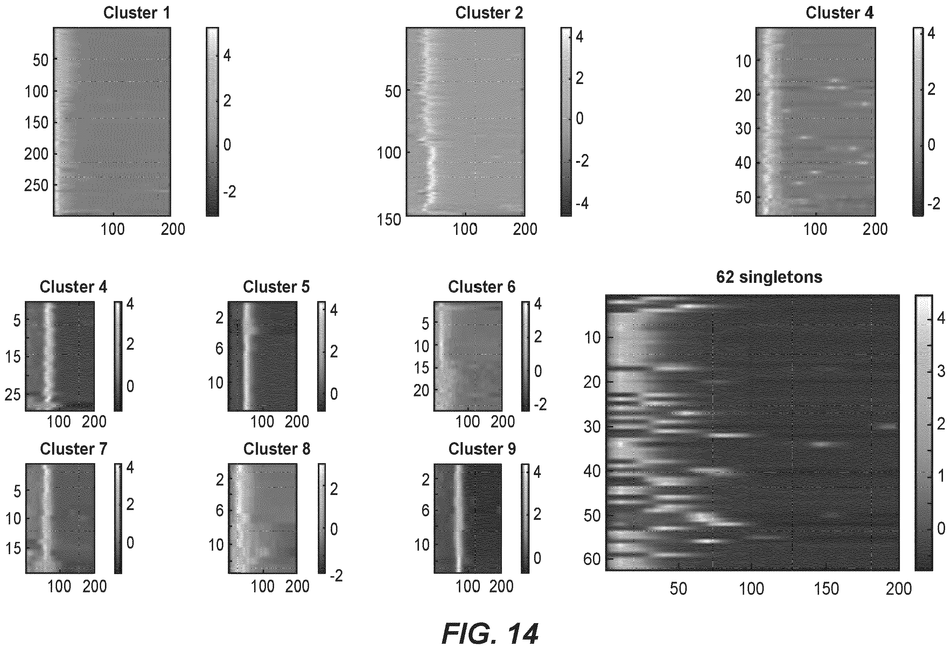

FIG. 14 is a collection of plots illustrating examples of final clusters and singletons that may be generated by methods, according to the present disclosure.

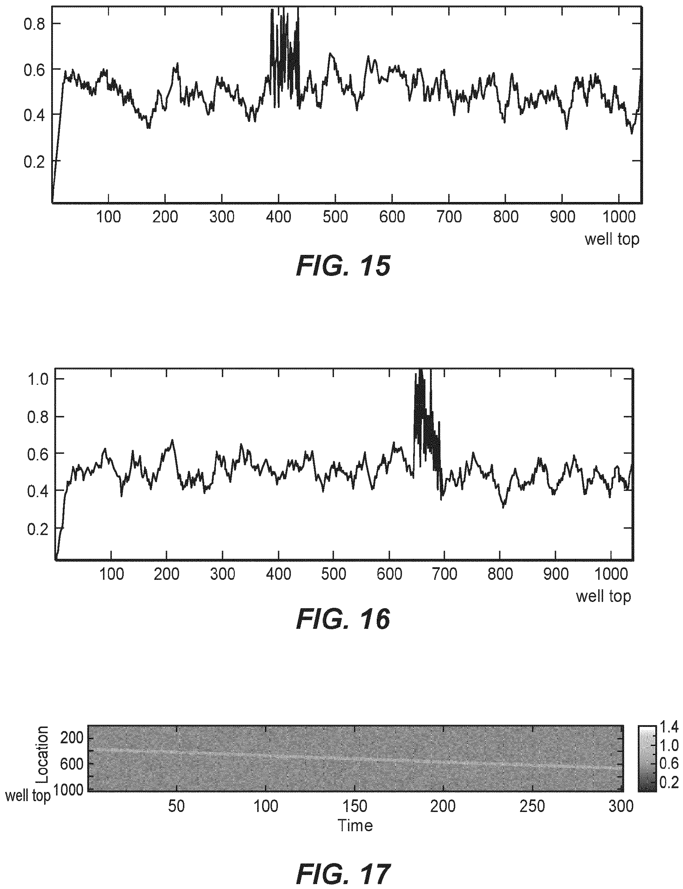

FIG. 15 is a plot illustrating an example of acoustic output as a function of location along a distributed acoustic sensor, according to the present disclosure.
FIG. 16 is another plot illustrating an example of acoustic output as the function of location along the distributed acoustic sensor, according to the present disclosure.
FIG. 17 is a plot illustrating acoustic output as a function of time and location along the length of the distributed acoustic sensor, according to the present disclosure.

### Detailed Description of the Invention

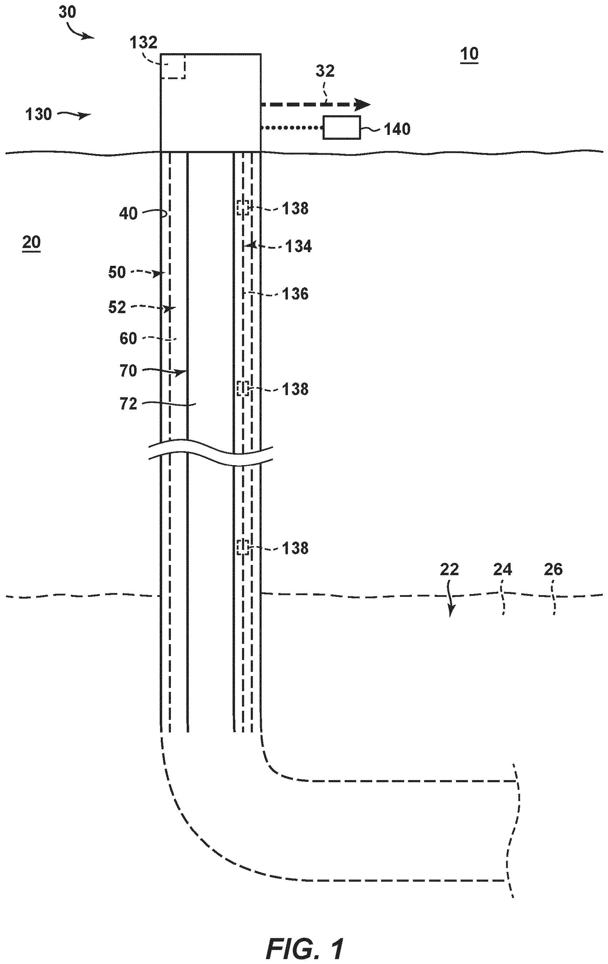

FIG. 1 is a schematic illustration of examples of hydrocarbon wells 30 that include controllers 140 programmed to perform methods 200, according to the present disclosure. In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

FIG. 1 is a schematic illustration of examples of hydrocarbon wells 30 that may be utilized with and/or may perform methods 200, according to the present disclosure. As illustrated in solid lines in FIG. 1, hydrocarbon wells 30 include a wellbore 40 that extends within a subsurface region 20. Wellbore 40 also may be referred to herein as extending between a surface region 10 and subsurface region 20. Subsurface region 20 may include a subterranean formation 22, which may include liquids 24 and/or gasses 26. Wellbore 40 may extend within the subterranean formation and may produce, or may be utilized to produce, a produced fluid stream 32, which may include liquids 24 and/or gasses 26, from the subterranean formation. Examples of hydrocarbon well 30 include a natural gas well and/or an oil well.

Hydrocarbon wells 30 also include an acoustic monitoring system 130. Acoustic monitoring system 130 may be adapted, configured, designed, and/or constructed to monitor an acoustic output from, sounds produced from, noises produced by, and/or vibrations produced by hydrocarbon wells 30. Stated another way, the acoustic output may include and/or may be defined by a plurality of sounds, noises, and/or vibrations produced by the hydrocarbon wells, and the acoustic monitoring system may be configured to monitor, to detect, to quantify, and/or to record the plurality of sounds.

As used herein, the phrase "acoustic output" may refer to any suitable vibration that may be emitted from, produced from, propagated by, and/or generated by hydrocarbon well 30. Additionally or alternatively, the acoustic output may refer to any suitable vibration that may be received by, detected by, and/or quantified by acoustic monitoring system 130. The acoustic output may have any suitable frequency, frequency range, amplitude, and/or amplitude range. In some examples, the acoustic output may be audible and/or may be detected by the human ear. Such audible acoustic output may, for example, have a frequency range of 10 Hertz (Hz) to 20 kilohertz (kHz). However, this is not required, and it is within the scope of the present disclosure that the acoustic output may have frequencies higher and/or lower than the audible frequency range. As examples, the acoustic output may have frequencies of at least 0.1 Hz, at least 1 Hz, at least 2 Hz, at least 4 Hz, at least 6 Hz, at least 8 Hz, at least 10 Hz, at least 25 Hz, at least 50 Hz, at least 100 Hz, at least 500 Hz, at least 1 kHz, at least 5 kHz, at least 10 kHz, at least 20 kHz, at least 30 kHz, at least 40 kHz, at least 50 kHz, at most 100 kHz, at most 90 kHz, at most 80 kHz, at most 70 kHz, at most 60 kHz, at most 50 kHz, at most 40 kHz, at most 30 kHz, at most 20 kHz, and/or at most 10 kHz. Stated differently, the acoustic output may have frequencies in the infrasonic, acoustic/audible, and/or ultrasonic frequency ranges.

As examples, this may include monitoring the acoustic output, including an amplitude of the acoustic output and/or a frequency of the acoustic output, as a function of time, such as during production of produced fluid stream 32 from the hydrocarbon well. Stated another way, acoustic monitoring system 130 may be configured to detect the acoustic output from hydrocarbon wells 30 at least while the hydrocarbon wells produce produced fluid stream 32.

In some examples, acoustic monitoring system 130 includes a surface acoustic sensor 132, which may be configured to detect and/or to monitor the acoustic output. Examples of the surface acoustic sensor include a surface microphone and/or a surface vibration sensor. In some examples, the acoustic monitoring system includes a downhole acoustic sensor 134, which may be positioned and/or may extend along a length of wellbore 40. An example of the downhole acoustic sensor includes a distributed acoustic sensor 136, such as a fiber optic cable, which may extend along at least a fraction of the length of the wellbore. Another example of the downhole acoustic sensor includes at least one discrete downhole acoustic sensor 138, or even a plurality of discrete downhole acoustic sensors 138. Examples of the discrete downhole acoustic sensor include a downhole microphone and/or a downhole vibration sensor.

Hydrocarbon wells 30 further include a controller 140. Controller 140 may be adapted, configured, designed, constructed, and/or programmed to control the operation of hydrocarbon wells 30 and/or of at least one other component of hydrocarbon wells 30. This may include controlling the operation of, receiving one or more signals from, and/or providing one or more signals to acoustic monitoring system 130. As a more specific example, and as discussed, controller 140 may be programmed to control the operation of hydrocarbon wells 30 according to, utilizing, and/or by performing any suitable step and/or steps of methods 200, which are discussed in more detail herein. Stated another way, controller 140 may be programmed to characterize the acoustic output from the hydrocarbon well by performing any suitable step and/or steps of methods 200.

Controller 140 may include and/or be any suitable structure, device, and/or devices that may be adapted, configured, designed, constructed, and/or programmed to perform the functions discussed herein. This may include controlling the operation of the at least one other component of hydrocarbon wells 30, such as via performing one or more steps of methods 200. As examples, controller 140 may include one or more of an electronic controller, a dedicated controller, a special-purpose controller, a personal computer, a special-purpose computer, a display device, a touch screen display, a logic device, a memory device, and/or a memory device having computer-readable storage media.

The computer-readable storage media, when present, also may be referred to herein as non-transitory computer-readable storage media. This non-transitory computer-readable storage media may include, define, house, and/or store computer-executable instructions, programs, and/or code; and these computer-executable instructions may direct hydrocarbon wells 30 and/or controller 140 thereof to perform any suitable portion, or subset, of methods 200. Examples of such non-transitory computer-readable storage media include CD-ROMs, disks, hard drives, flash memory, etc. As used herein, storage, or memory, devices and/or media having computer-executable instructions, as well as computer-implemented methods and other methods according to the present disclosure, are considered to be within the scope of subject matter deemed patentable in accordance with Section 101 of Title 35 of the United States Code.

As illustrated in FIG. 1, hydrocarbon wells 30 may include production tubing 70, which may extend within wellbore 40 and/or may define a tubing conduit 72. In some examples, hydrocarbon wells 30 also may include a casing string 50. Casing string 50, when present, may extend within wellbore 40 and/or may define a casing conduit 52. For example, production tubing 70 may extend within casing conduit 52, and/or casing string 50 and production tubing 70 may define an annular space 60 therebetween. Downhole acoustic sensor 134, when present, may be positioned and/or may extend within casing conduit 52, within tubing conduit 72, and/or within annular space 60.

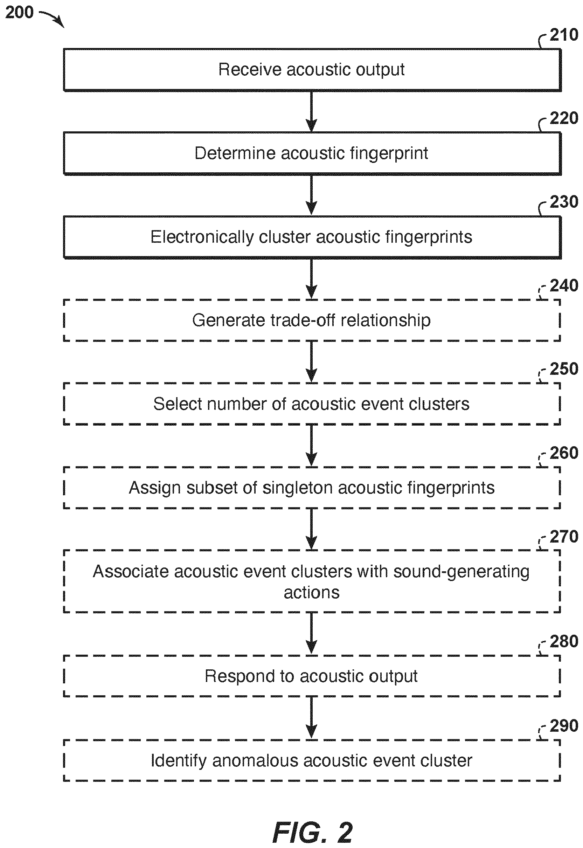

FIG. 2 is a flowchart depicting examples of methods 200 of characterizing acoustic output from a hydrocarbon well, according to the present disclosure. Methods 200 include receiving an acoustic output at 210, determining an acoustic fingerprint at 220, and electronically clustering acoustic fingerprints at 230. Methods 200 also may include generating a trade-off relationship at 240, selecting a number of acoustic event clusters at 250, and/or assigning a subset of singleton acoustic fingerprints at 260. Methods 200 further may include associating acoustic event clusters with sound-generating actions at 270, responding to the acoustic output at 280, and/or identifying anomalous acoustic event clusters at 290.

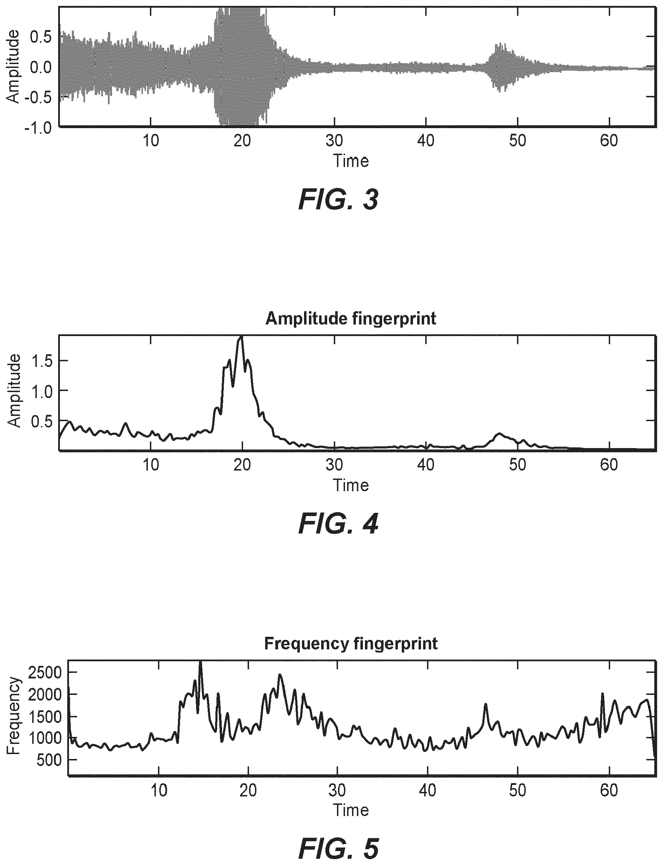

Receiving the acoustic output at 210 may include receiving any suitable acoustic output detected at the hydrocarbon well. The acoustic output may include information regarding a plurality of sound events, and each sound event of the plurality of sound events may include at least one corresponding sound detected at, generated by, and/or generated from the hydrocarbon well. An example of the acoustic output is illustrated in FIG. 3, which illustrates amplitude of the acoustic output as a function of time.

The receiving at 210 may be performed in any suitable manner. As an example, the receiving at 210 may include receiving an acoustic data file that is representative of the acoustic output. Stated another way, the receiving at 210 may include receiving the acoustic output, such as via the acoustic data file, subsequent to detection of the acoustic output at the hydrocarbon well. As another example, the receiving at 210 may include recording and/or detecting the acoustic output utilizing an acoustic monitoring system of the hydrocarbon well. In some such examples, the receiving at 210 may include receiving the acoustic output in real-time, at least partially concurrently with, and/or at least partially responsive to detection of the acoustic output at the hydrocarbon well.

In some examples, the acoustic monitoring system may include and/or be a surface acoustic sensor, and the recording and/or detecting may include recording and/or detecting with, via, and/or utilizing the surface acoustic sensor, examples of which are disclosed herein with reference to surface acoustic sensor 132 of FIG. 1.

In some such examples, the acoustic monitoring system may include and/or be a downhole acoustic sensor, which may be positioned within a wellbore of the hydrocarbon well. In such examples, the recording and/or detecting may include recording and/or detecting with, via, and/or utilizing the downhole acoustic sensor. Examples of the downhole acoustic sensor are disclosed herein with reference to downhole acoustic sensor 134 of FIG. 1.

In some such examples, the downhole acoustic sensor may be positioned along a length of the wellbore. In some such examples, the downhole acoustic sensor may include and/or be a distributed acoustic sensor that extends along at least a fraction of the length of the wellbore, and the recording may include utilizing the distributed acoustic sensor to record and/or detect the acoustic output. In some such examples, and as discussed in more detail herein, methods 200 may include tracking a position and/or location along the length of the wellbore at which a given sound of the plurality of sounds is generated and/or tracking the position and/or location of the given sound as a function of time.

Determining the acoustic fingerprint at 220 may include determining a plurality of acoustic fingerprints of the acoustic output. The plurality of acoustic fingerprints may include a corresponding acoustic fingerprint for each sound event of the plurality of sound events. In some examples, the determining at 220 may include establishing and/or generating a plurality of discrete acoustic fingerprints with, via, utilizing, and/or from the acoustic output. Stated another way, and as discussed, the acoustic output includes information regarding the plurality of sound events, each of which includes at least one sound, and the determining at 220 may include determining a separate and/or distinct acoustic fingerprint for each sound event and/or for each sound.

In some examples, the determining at 220 may include determining the plurality of acoustic fingerprints in the form of a plurality of amplitude fingerprints, which describe an amplitude of the acoustic output as a function of time. An example of such an amplitude fingerprint is illustrated in FIG. 4. In some examples, the determining at 220 may include determining the plurality of acoustic fingerprints in the form of a plurality of frequency acoustic fingerprints, which describe a frequency of the acoustic output as a function of time. An example of such a frequency fingerprint is illustrated in FIG. 5.

In some examples, the determining at 220 may include downsampling the acoustic output to generate the plurality of acoustic fingerprints. This may include downsampling the amplitude of the acoustic output to generate the plurality of amplitude acoustic fingerprints and/or downsampling the frequency of the acoustic output to generate the plurality of frequency acoustic fingerprints. In some examples, the determining at 220 additionally or alternatively may include additional processing and/or compressing of the acoustic output to produce and/or generate the plurality of acoustic fingerprints.

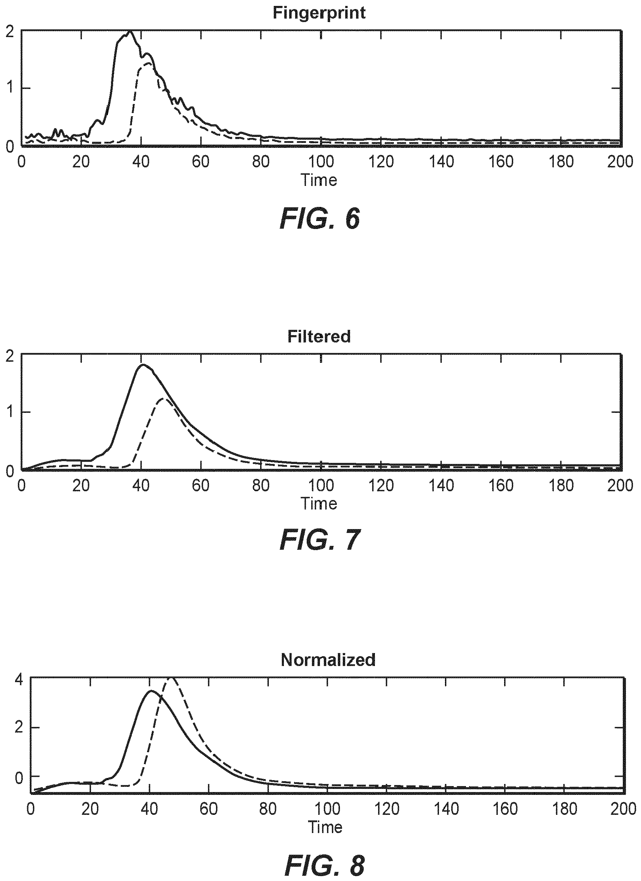

In some examples, the determining at 220 also may include additional processing, or pre-processing, of the plurality of acoustic fingerprints. Examples of this additional processing, or pre-processing, may include filtering the plurality of acoustic fingerprints, normalizing the plurality of acoustic fingerprints, removing at least one outlier from at least one acoustic fingerprint of the plurality of acoustic fingerprints, smoothing the plurality of acoustic fingerprints, and/or weighting the plurality of acoustic fingerprints. In a specific example, a plurality of acoustic fingerprints, such as may be illustrated in FIG. 6, may be filtered to produce and/or generate a plurality of filtered acoustic fingerprints, as illustrated in FIG. 7. The plurality of filtered acoustic fingerprints then may be normalized to produce and/or generate a plurality of filtered and normalized acoustic fingerprints, as illustrated in FIG. 8. The plurality of filtered and normalized acoustic fingerprints then may be electronically clustered, such as during the electronically clustering at 230.

Electronically clustering the acoustic fingerprints at 230 may include electronically clustering the plurality of acoustic fingerprints utilizing a clustering algorithm. This may include electronically clustering to generate a plurality of acoustic event clusters. Each acoustic event cluster of the plurality of acoustic event clusters may include a corresponding fingerprint subset of the plurality of acoustic fingerprints, and each acoustic fingerprint in the corresponding fingerprint subset may include at least one similar acoustic property. Stated another way, the electronically clustering at 230 may include grouping acoustic fingerprints, which include the at least one similar acoustic property, together and/or within a given acoustic event cluster. The grouping may be performed in any suitable manner, such as utilizing the methodologies discussed in more detail herein.

The at least one similar acoustic property may be defined in any suitable manner. As an example, and as discussed in more detail herein, the at least one similar acoustic property may be established, determined, and/or defined in a relative fashion utilizing a trade-off curve of an agglomerative clustering algorithm. As additional examples, the at least one similar acoustic property may include and/or be defined by acoustic fingerprints that differ from one another by less than a threshold amount, that are within a threshold distance of one another within a coordinate system that is defined by the acoustic fingerprints, and/or that are generated by the same sound event, or by similar types of sound events. In a specific example, the electronically clustering at 230 may include grouping acoustic fingerprints that include at least one similar acoustic property within the same corresponding fingerprint subset.

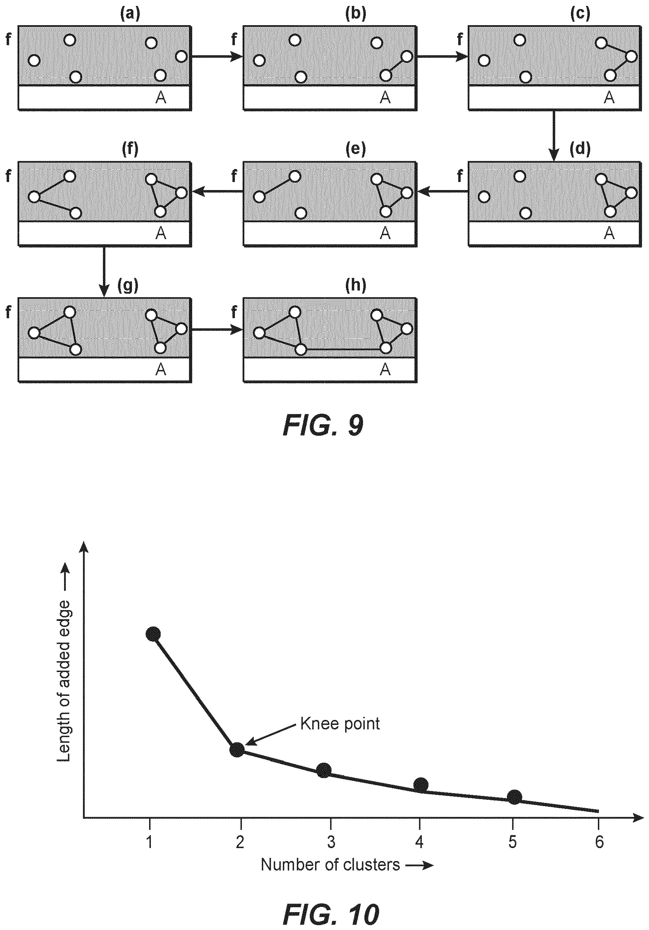

Generating the trade-off relationship at 240 may include generating any suitable trade-off relationship, or trade-off curve. The trade-off relationship may relate, or correlate, a number of acoustic event clusters in the plurality of acoustic event clusters to a degree of similarity in the at least one similar acoustic property for the corresponding fingerprint subset that is included within each acoustic event cluster. Stated another way, the trade-off relationship may indicate how similar grouped acoustic fingerprints are to one another as a function of the number of acoustic event clusters. An example of the trade-off relationship, in the form of a trade-off curve, is illustrated in FIG. 10 and discussed in more detail herein.

In a specific example, the clustering algorithm may include and/or be an agglomerative clustering algorithm. Examples of the agglomerative clustering algorithms are disclosed in U.S. Patent No. 8,145,672, the complete disclosure of which is hereby incorporated by reference.

Another example of an agglomerative clustering algorithm is illustrated in FIGs. 9-10. In the example of FIGs. 9-10, the plurality of sound events includes six sound events, and the plurality of acoustic fingerprints includes a frequency acoustic fingerprint and a corresponding amplitude acoustic fingerprint for each sound event. With this in mind, FIG. 9 plots each sound event in a two-dimensional coordinate system utilizing a value of the frequency acoustic fingerprint as the ordinate coordinate and a value of the amplitude acoustic fingerprint as the abscissa coordinate.

In the example of FIG. 9(a), each cluster of the plurality of acoustic event clusters includes only a single sound event. As discussed in more detail herein, these clusters with only a single sound event also may be referred to herein as singletons, or as singleton clusters. Stated another way, FIG. 9(a) illustrates six singleton clusters.

In FIG. 9(b), two sound events have been combined into a first cluster, as indicated by the line extending between two sound events in the figure. This is accomplished by grouping the two sound events, which are closest to one another within the two-dimensional coordinate system, into the first cluster. Subsequent to this grouping, there are five clusters, namely, four singleton clusters and the first cluster, which include two sound events. Concurrently with this analysis, and as illustrated in FIG. 10, a trade-off curve may be generated as part of the generating at 240. The trade-off curve plots a total distance, or a length of added edge, between sound events contained within clusters that include two or more sound events. Thus, the rightmost point in FIG. 10 corresponds to the clustering illustrated in FIG. 9(a) (i.e., six clusters and a total distance of zero), while the point immediately to the left corresponds to the clustering illustrated in FIG. 9(b) (i.e., five clusters and an increased total distance as measured by the length of the line in FIG. 9(b)).

In FIG. 9(c), three sound events have been combined into the first cluster, as indicated by the added line when compared to FIG. 9(b). This is accomplished by grouping the two next-closest sound events. Subsequent to this grouping, there are four clusters, namely, three singleton clusters and the first cluster, which now include three sound events. This point also is added to the trade-off curve of FIG. 10 as part of the generating at 240.

In FIG. 9(d), the same three sound events have been connected by an additional line, as indicated by the added line when compared to FIG. 9(c). This is, once again, accomplished by grouping the two next-closest sound events. Subsequent to this grouping, there still are four clusters, namely, three singleton clusters and the first cluster, which still include three sound events. Because this step did not change the number of clusters, there is no change to the trade-off curve of FIG. 10 as part of the generating at 240.

In FIG. 9(e), two different sound events have been combined into a second cluster, as indicated by the added line when compared to FIG. 9(d). This is, once again, accomplished by grouping the two next-closest sound events. Subsequent to this grouping, there are three clusters, namely, one singleton cluster, the second cluster, which includes two sound events, and the first cluster, which includes three sound events. This point also is added to the trade-off curve of FIG. 10 as part of the generating at 240.

In FIG. 9(f), a third sound event has been added to the second cluster, as indicated by the added line when compared to FIG. 9(e). This is, once again, accomplished by grouping the two next-closest sound events. Subsequent to this grouping, there are two clusters, namely, the second cluster, which includes three sound events, and the first cluster, which also includes three sound events. This point also is added to the trade-off curve of FIG. 10 as part of the generating at 240.

In FIG. 9(g), the three sound events in the second cluster have been connected by an additional line, as indicated by the added line when compared to FIG. 9(f). This is, once again, accomplished by grouping the two next-closest sound events. Subsequent to this grouping, there still are two clusters, namely, the first cluster and the second cluster. Because this step did not change the number of clusters, there is no change to the trade-off curve of FIG. 10 as part of the generating at 240.

In FIG. 9(h), the first cluster and the second cluster have been combined into a combined cluster, as indicated by the added line when compared to FIG. 9(g). This is, once again, accomplished by grouping the two next-closest sound events. Subsequent to this grouping, there is one cluster that includes all six sound events. This point also is added to the trade-off curve of FIG. 10 as part of the generating at 240.

The above-described example applies a specific agglomerative clustering algorithm to two-dimensional acoustic fingerprint data that includes a total of six points. However, it is within the scope of the present disclosure that the acoustic fingerprint data may be defined in any suitable number of dimensions, including (or at least) one dimension, three dimensions, four dimensions, five dimensions, or six dimensions. Similarly, the acoustic fingerprint data may include any suitable number of data points. As examples, the agglomerative clustering techniques may be applied to acoustic fingerprint data that includes at least 10, at least 100, at least 1000, or at least 10,000 data points.

Selecting the number of acoustic event clusters at 250 may include selecting the number of acoustic event clusters based, at least in part, on the trade-off relationship. As an example, and with reference to FIG. 10, the number of acoustic event clusters may be selected to correspond to a "knee point," or region of increasing slope magnitude, of the trade-off curve. In some examples, the knee point may be quantitatively defined, such as via a point at which the slope magnitude of the trade-off exceeds a threshold value.

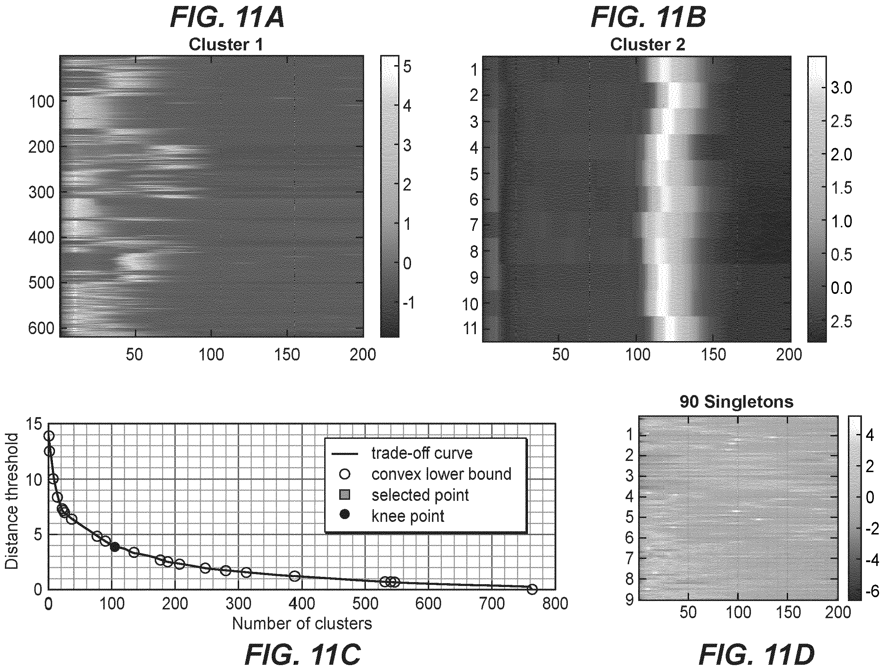

In some examples, the knee point may be more qualitatively defined, such as via an iterative process. As an example, FIGs. 11-12 illustrate examples of clusters, trade-off curves, and singletons for acoustic output that include approximately 760 sound events.

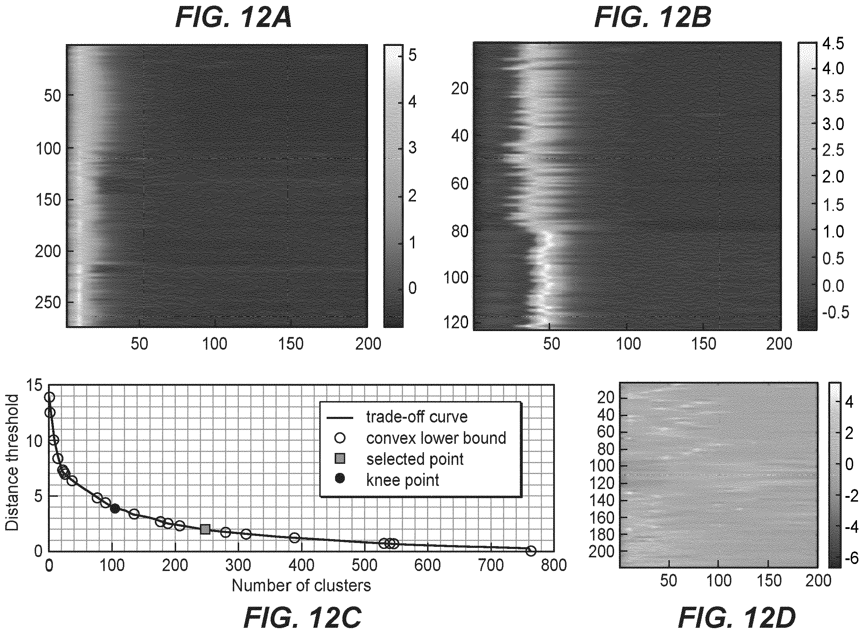

More specifically, FIGs. 11(c) and 12(c) illustrate the trade-off curve for the acoustic output. In addition, FIGs. 11(a) and 12(a) are spectrograms that illustrate a first, or largest, cluster for the acoustic output, FIGs. 11(b) and 12(b) are spectrograms that illustrate a second, or second-largest, cluster for the acoustic output, and FIGs. 11(d) and 12(d) illustrate singletons for the acoustic output. The spectrograms illustrated in FIG. 11 correspond to selection of the knee point on the trade-off curve (i.e., 105 clusters, as illustrated in black) to define the total number of clusters, while the spectrograms illustrated in FIG. 12 correspond to selection of a greater number of clusters (i.e., 248 clusters, as illustrated in grey). The spectrograms plot distinct sound events on the ordinate and time on the abscissa, with level of greyscale corresponding to the intensity of a given sound event at a given point in time. As may be seen by the transition from FIG. 11(a) to FIG. 12(a) or by the transition from FIG. 11(b) to FIG. 12(b), increasing the number of clusters generally causes individual clusters to be more homogeneous. However, and as illustrated by the transition from FIG. 11(d) to FIG. 12(d), increasing the number of clusters also leads to an increase in the number of singleton clusters, or ungrouped sound events.

With the above in mind, and in some examples, it may be desirable to decrease the number of singleton clusters, thereby decreasing a need to manually characterize and/or identify the singleton clusters. In such examples, a relatively smaller overall number of clusters may be selected. Alternatively, and in some examples, it may be desirable to have a relatively higher degree of confidence that the sound events included within a given cluster are more homogeneous, are similar in nature, and/or are generated by the same, or by a similar, physical process. In such examples, a relatively larger overall number of clusters may be selected.

As discussed, the electronically clustering at 230 may produce and/or generate at least one singleton cluster, or even a plurality of singleton clusters, as illustrated in FIGs. 11(d) and 12(d). The at least one singleton cluster may include singleton acoustic fingerprints with dissimilar acoustic properties relative to a remainder of the plurality of acoustic fingerprints. As also discussed, the selecting at 250 may be utilized to selectively vary an overall number of singleton clusters produced and/or generated by the electronically clustering at 230.

In some examples of methods 200, it may be desirable to further decrease the number of singleton clusters, such as to decrease a need to manually review and/or characterize the singleton clusters. In some such examples, methods 200 further may include assigning the subset of singleton acoustic fingerprints at 260. The assigning at 260 may include assigning the subset of the singleton acoustic fingerprints to a corresponding acoustic event cluster of the plurality of acoustic event clusters. This may include assigning to the corresponding acoustic event cluster within which the at least one similar acoustic property is most similar to a corresponding acoustic property of a corresponding singleton acoustic fingerprint.

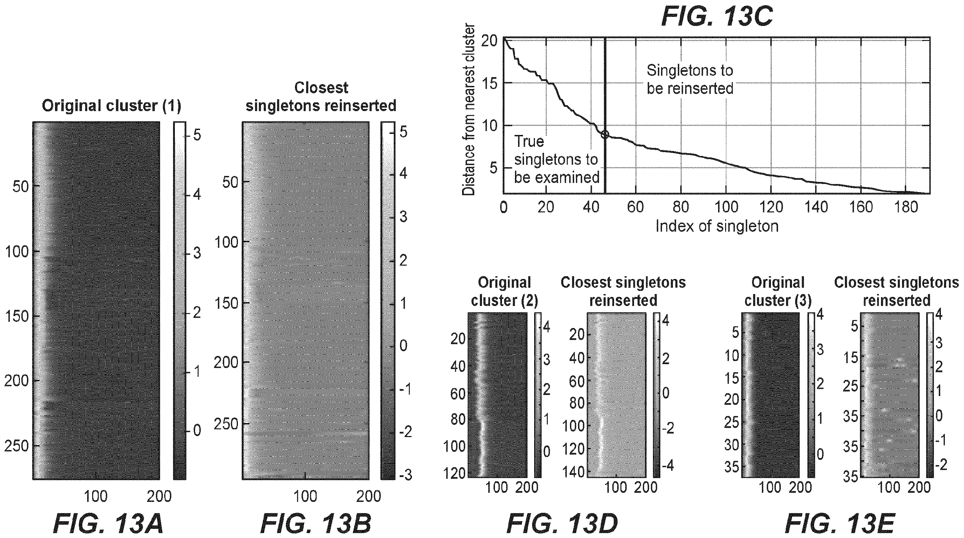

An example of the assigning at 260 is illustrated in FIGs. 13(a)-13(e). More specifically, FIG. 13(c) illustrates a distance between a given singleton and the nearest cluster (on the ordinate) for a variety of singleton clusters (on the abscissa), and the vertical line divides singletons that are less than a threshold distance from the nearest clusters and thus will be inserted into the nearest cluster (to the right) from singletons that are greater than the threshold distance from the nearest cluster and thus will not be inserted into the nearest cluster. FIG. 13(a) illustrates the first cluster, or the largest cluster, prior to singleton insertion, while FIG. 13(b) illustrates the first cluster subsequent to singleton insertion. FIGs. 13(d) and 13(e) provide similar comparisons for the second cluster and third cluster, respectively. As illustrated, insertion of the singletons increases variability, or decreases homogeneity, of some clusters; however, the number of singleton clusters is decreased, thereby simplifying subsequent characterization and/or analysis. FIG. 14 illustrates the first nine clusters, and the remaining singletons, subsequent to the assigning at 260.

Associating the acoustic event clusters with sound-generating actions at 270 may include associating each acoustic event cluster of the plurality of acoustic event clusters with a corresponding sound-generated action, which generated, or is assumed to have generated, each sound event included in each acoustic event cluster. Stated another way, and as discussed, each acoustic event cluster may include acoustically similar sound events, which may be generated by the same, or by similar, sound-generating actions. With this in mind, the associating at 270 may include indicating what sound-generating action, or physical phenomena, generated the sound events included within each acoustic event cluster. Examples of the sound-generating action include opening a valve of the hydrocarbon well, closing the valve of the hydrocarbon well, starting a pump of the hydrocarbon well, operation of a pump of the hydrocarbon well, and/or fluid flow within the hydrocarbon well.

The associating at 270 may be performed in any suitable manner. As an example, the associating at 270 may include listening, such as by an operator of the hydrocarbon well, to at least a subset of the sound events included in at least a subset, or in each, acoustic event cluster to determine the corresponding sound-generating action. As another example, the associating at 270 may include automatically and/or electronically associating at least a subset of the plurality of acoustic event clusters, or even each acoustic event cluster, with the corresponding sound-generating action via electronic comparison of one or more sound events within the acoustic event cluster to a sound event database. Such processes may permit accurate characterization and/or classification of sound events without the need to listen to every sound event contained within the acoustic output from the hydrocarbon well, thereby improving overall efficiencies.

Responding to the acoustic output at 280 may include responding to the acoustic output in any suitable manner and may be based, at least in part, on the electronically clustering at 230 and/or on the associating at 270. In some examples, the responding at 280 may be performed automatically and/or in real-time, such as during the receiving at 210, during the determining at 220, during the electronically clustering at 230, during the generating at 240, during the selecting at 250, during the assigning at 260, and/or during the associating at 270. In some examples, the responding at 280 may be performed subsequent to performing a remainder of methods 200.

In some examples, the responding at 280 may include notifying an operator of the hydrocarbon well upon receipt of a specific, given, and/or predetermined sound event. As an example, the specific sound event may be indicative of a mechanical issue, an impending issue, a failure, or an impending failure of at least one component of the hydrocarbon well. As another example, the sound event may include a corresponding acoustic property that is dissimilar to the at least one similar acoustic property of each of the plurality of acoustic event clusters. Stated another way, the notifying may include notifying the operator when a new, or previously undetected, sound is received.

In some examples, the responding at 280 may include performing one or more physical actions, such as responsive to the notifying. Examples of the physical actions include initiating maintenance of the hydrocarbon well, replacing a component of the hydrocarbon well, and/or changing an operational parameter of the hydrocarbon well.

Identifying anomalous acoustic event clusters at 290 may include identifying acoustic event clusters that may be indicative of anomalous operation of the hydrocarbon well and/or undesired operation of the hydrocarbon well. In some such examples, the responding at 280 may include notifying the operator of the hydrocarbon well upon addition of a sound event to the at least one anomalous acoustic event cluster. Stated another way, the anomalous acoustic event cluster may include sound events generated by the anomalous and/or undesired operation of the hydrocarbon well, such as by failure, or impending failure, of one or more components of the hydrocarbon well. With this in mind, it may be desirable to notify the operator of the hydrocarbon well when one or more sound events is added to the anomalous acoustic event cluster, as such addition may be indicative of an undesired condition within the hydrocarbon well. Such a configuration may permit and/or facilitate improved and/or proactive response to the undesired condition.

As discussed in more detail herein with reference to FIG. 1, the hydrocarbon well may include a distributed acoustic sensor, such as distributed acoustic sensor 136, which may extend along at least a subset of a length of the hydrocarbon well. As also discussed, and in such a configuration, the distributed acoustic sensor may provide information regarding a location, along the length of the hydrocarbon well, at which a given sound event is generated. Some sound events, such as sound events generated by mechanical structures that are fixed in space, may have a fixed location that does not vary with time.

Other sound events may have a variable location and/or may move with time. As an example, a fluid phase boundary and/or sand may move within the hydrocarbon well. With this in mind, the acoustic output may include a plurality of sounds; and methods 200 may include determining a region of the distributed acoustic sensor that is utilized to detect each sound of the plurality of sounds. Additionally or alternatively, methods 200 may include determining a position, along the length of the wellbore, for each sound of the plurality of sounds, and this position may be based, at least in part, on the region of the distributed acoustic sensor utilized to detect each sound of the plurality of sounds. In some such examples, methods 200 further may include tracking the position along the length of the wellbore for at least a subset of the plurality of sounds. Such a configuration may permit and/or facilitate tracking and/or identifying the location as a function of time and/or monitoring a speed and/or velocity of the sound event within the wellbore.

Such tracking is illustrated in FIGs. 15-17. More specifically, FIG. 15 illustrates a signal strength of the distributed acoustic sensor as a function of position along the length of the wellbore at a given point in time, and FIG. 16 illustrates the signal strength as the function of position at a subsequent point in time. FIG. 15 illustrates a sound event that originates at approximately 400-450 on the abscissa, while FIG. 16 illustrates a similar sound event that originates at approximately 650-700. FIG. 17 illustrates the location of the sound event, as indicated by the straight line, as a function of time, such as may be determined from a time-based series of the plots of FIGs. 15-16. In the example of FIGs. 15-17, the sound event moves toward the surface (or well top) with time and may, for example, be an air bubble that is traveling within the wellbore.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently. It is also within the scope of the present disclosure that the blocks, or steps, may be implemented as logic, which also may be described as implementing the blocks, or steps, as logics. In some applications, the blocks, or steps, may represent expressions and/or actions to be performed by functionally equivalent circuits or other logic devices. The illustrated blocks may, but are not required to, represent executable instructions that cause a computer, processor, and/or other logic device to respond, to perform an action, to change states, to generate an output or display, and/or to make decisions.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of' performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

### Industrial Applicability

The systems and methods disclosed herein are applicable to the oil and gas industries.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions, and/or properties disclosed herein. Similarly, where the claims recite "a" or "a first" element or the equivalent thereof, such claims should be understood to include incorporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements, and/or properties may be claimed through amendment of the present claims or presentation of new claims in this or a related application. Such amended or new claims, whether they are directed to a different invention or directed to the same invention, whether different, broader, narrower, or equal in scope to the original claims, are also regarded as included within the subject matter of the inventions of the present disclosure.

## Claims

1. A method of characterizing acoustic output from a hydrocarbon well, the method comprising:
receiving the acoustic output, wherein the acoustic output includes information regarding a plurality of sound events, and further wherein each sound event of the plurality of sound events includes at least one corresponding sound detected at the hydrocarbon well;
determining a plurality of acoustic fingerprints of the acoustic output, wherein the plurality of acoustic fingerprints includes a corresponding acoustic fingerprint for each sound event of the plurality of sound events; and
electronically clustering the plurality of acoustic fingerprints, utilizing a clustering algorithm, to generate a plurality of acoustic event clusters, wherein each acoustic event cluster of the plurality of acoustic event clusters includes a corresponding fingerprint subset of the plurality of acoustic fingerprints, and further wherein each acoustic fingerprint in the corresponding fingerprint subset includes at least one similar acoustic property.

2. The method of claim 1, wherein the receiving the acoustic output includes recording the acoustic output utilizing an acoustic monitoring system of the hydrocarbon well.

3. The method of claim 2, wherein the acoustic monitoring system includes a surface acoustic sensor positioned proximate a surface region, and further wherein the recording includes utilizing the surface acoustic sensor to detect the acoustic output.

4. The method of any of claims 2-3, wherein the acoustic monitoring system includes a downhole acoustic sensor that is positioned within a wellbore of the hydrocarbon well, and further wherein the recording includes utilizing the downhole acoustic sensor to detect the acoustic output.

5. The method of claim 4, wherein the downhole acoustic sensor includes a distributed acoustic sensor that extends along at least a fraction of a length of the wellbore, and further wherein the recording includes utilizing the distributed acoustic sensor to detect the acoustic output.

6. The method of claim 5, wherein the acoustic output includes a plurality of sounds, and further wherein the method includes determining a region of the distributed acoustic sensor utilized to detect each sound of the plurality of sounds, optionally wherein the method further includes determining a position, along the length of the wellbore, for each sound of the plurality of sounds based, at least in part, on the region of the distributed acoustic sensor utilized to detect each sound of the plurality of sounds, and further optionally wherein the method includes tracking the position, along the length of the wellbore, for at least a tracked subset of the plurality of sounds.

7. The method of any of claims 1-6, wherein the determining the plurality of acoustic fingerprints includes at least one of:
(i) determining a plurality of amplitude fingerprints of an amplitude of the acoustic output as a function of time; and
(ii) determining a plurality of frequency fingerprints of a frequency of the acoustic output as a function of time.

8. The method of any of claims 1-7, wherein the electronically clustering the plurality of acoustic fingerprints includes grouping acoustic fingerprints of the plurality of acoustic fingerprints, which include the at least one similar acoustic property, within the same corresponding fingerprint subset.

9. The method of any of claims 1-8, wherein the clustering algorithm includes an agglomerative clustering algorithm.

10. The method of any of claims 1-9, wherein the method further includes generating a trade-off relationship that relates a number of acoustic event clusters in the plurality of acoustic event clusters to a degree of similarity in the at least one similar acoustic property for the corresponding fingerprint subset included within each acoustic event cluster, and wherein the method further includes selecting a number of acoustic event clusters based, at least in part, on the trade-off relationship.

11. The method of any of claims 1-10, wherein the electronically clustering the plurality of acoustic fingerprints further includes generating a singleton cluster, which includes singleton acoustic fingerprints of the plurality of acoustic fingerprints with dissimilar acoustic properties relative to a remainder of the plurality of acoustic fingerprints, optionally wherein the method further includes assigning a subset of the singleton acoustic fingerprints to a corresponding acoustic event cluster of the plurality of acoustic event clusters within which the at least one similar acoustic property is most similar to a corresponding acoustic property of a corresponding singleton acoustic fingerprint.

12. The method of any of claims 1-11, wherein the method further includes associating each acoustic event cluster of the plurality of acoustic event clusters with a corresponding sound-generating action that generated sound events included in each acoustic event cluster.

13. The method of any of claims 1-12, wherein the method further includes responding to the acoustic output, wherein the responding is based, at least in part, on the electronically clustering, optionally wherein the responding includes at least one of:
(i) notifying an operator of the hydrocarbon well upon receipt of a sound event with a corresponding acoustic property that is dissimilar to the at least one similar acoustic property of each of the plurality of acoustic event clusters;
(ii) initiating maintenance of the hydrocarbon well;
(iii) replacing a component of the hydrocarbon well; and
(iv) changing an operational parameter of the hydrocarbon well.

14. The method of claim 13, wherein the method further includes identifying at least one anomalous acoustic event cluster of the plurality of acoustic event clusters, and further wherein the responding includes notifying the operator of the hydrocarbon well upon addition of a sound event of the plurality of sound events to the at least one anomalous acoustic event cluster.

15. A hydrocarbon well, comprising:
a wellbore that extends within a subsurface region;
an acoustic monitoring system configured to monitor an acoustic output from the hydrocarbon well; and
a controller programmed to characterize the acoustic output according to the method of any of claims 1-14.
